# EUROPEAN PATENT SPECIFICATION

(11) **EP 4 401 174 B1**
(45) Date of publication and mention of the grant of the patent: **23.07.2025**
(21) Application number: 23204684.7
(22) Date of filing: 19.10.2023
(51) Int. Cl.: H01M 8/04029, H01M 8/04537, H01M 8/04746, H01M 8/249, H01M 8/0612, B63H 21/00

(54) **A SHIP WITH A FUEL CELL POWER PLANT**
EIN SCHIFF MIT EINEM BRENNSTOFFZELLEN-KRAFTWERK
UN NAVIRE ÉQUIPÉ D'UNE CENTRALE ÉLECTRIQUE À PILE À COMBUSTIBLE

(43) Date of publication of application: 17.07.2024
(73) Proprietor: Jezdinsky, Martin, 19061 Schwerin (DE)
(72) Inventor: Jezdinsky, Martin, 19061 Schwerin (DE)
(74) Representative: Hauck Patent- und Rechtsanwälte PartmbB

(56) References cited:
- KR-A- 20150 112 279
- US-A- 5 678 647
- US-A1- 2022 393 208
- E4SHIPS: "e4ships - Fuel Cells in Marine Applications 2016-2022", 30 September 2022 (2022-09-30), pages 1 - 24, XP093162209, Retrieved from the Internet <URL:https://www.e4ships.de/english/services/e4ships-brochure-2016-2022> [retrieved on 20240514]

## Description

The invention relates to a ship comprising accommodation facilities having a first power demand, a propulsion system having a second power demand, and a power plant, the power plant comprising fuel cells.

The vast majority of ships is powered by combustion engines. Onboard a ship, fuel cells have been used as auxiliary power source for providing a minor part of the required energy only, in particular using low-temperature fuel cells of the proton exchange membrane type.

Only a few studies have been published using high-temperature fuel cells mainly on cargo vessels. A report entitled "e4ships - FUEL CELLS IN MARINE APPLICATIONS - 2016-2022" covers, among other things, a project using solid oxide fuel cells powered by reformatted diesel fuel, referred to as "MultiSchIBZ". It is available for download under https://www.e4ships.de/english/services/e4ships-brochure-2016-2022.

The European Commission published reports entitled "Fuel cell power trains and clustering in heavy-duty transports" and "Validation of renewable methanol based auxiliary power system for commercial vessels".

The document US 5,678,647 B2 discloses a propulsion system for a marine vehicle driven by an electric motor. The electric energy is supplied by a solid oxide fuel cell (SOFC), wherein the thermal and electric outputs of the SOFC are combined with a turbine-generator system.

The document KR20150112279 A discloses a ship using both a fuel cell system for generating auxiliary power and a main generator for generating main power. The system collects waste heat from the fuel cell system and the main generator, and supplies the waste heat to a place demanding heat in the ship.

Document US 2022/393208 A1 discloses discloses a ship comprising accommodation facilities having a first power demand, a propulsion system having a second power demand, and a power plant, the power plant comprising:
· a first fuel cell unit having a first rated power corresponding to the first power demand,
· a second fuel cell unit having a second rated power corresponding to the second power demand,
· a controller adapted to control reactant supply to the first fuel cell unit, reactant supply to the second fuel cell unit, wherein the controller is adapted to operate the power plant in a first operating mode in which the first fuel cell unit is operated at the first rated power, no reactants are supplied to the second fuel cell unit.

Departing therefrom, it is an object of the invention to provide a ship with a power plant based on fuel cells which is better adapted to the specific energy requirements of the ship and can be operated with higher efficiency and simplified operational requirements.

This object is solved by the ship with the features of claim 1. Preferred aspects of the invention are given in the dependent claims.

The ship comprises accommodation facilities having a first power demand, a propulsion system having a second power demand and a power plant, the power plant comprising:
- a first high-temperature fuel cell unit having a first rated power corresponding to the first power demand,
- a second high-temperature fuel cell unit having a second rated power corresponding to the second power demand,
- a primary heating/cooling circuit comprising a non-reacting heating/cooling fluid and being thermally coupled to the first fuel cell unit and to the second fuel cell unit, and a flow control means controlling flow of the heating/cooling fluid, and
- a controller adapted to control reactant supply to the first fuel cell unit, reactant supply to the second fuel cell unit and to control the flow control means, wherein the controller is adapted to operate the power plant in a first operating mode in which the first fuel cell unit is operated at the first rated power, no reactants are supplied to the second fuel cell unit and the primary heating/cooling circuit transfers heat from the first fuel cell unit to the second fuel cell unit so that the second fuel cell unit is maintained at a first elevated temperature.

The ship may be any type of ship having a propulsion system and accommodating one or more persons, for example a private yacht, a freight ship or a cruise ship. The ship - at least when not having a land connection - is powered entirely or almost entirely by means of the fuel cell units. It does not comprise a combustion engine, neither for providing electricity nor for providing propulsion, possibly with the exception of a backup system used only in case of an emergency.

The ship comprises accommodation facilities including for example one or more passenger cabins, one or more crew cabins, a command bridge, recreational facilities such as a swimming pool, etc. The accommodation facilities have a first power demand, which is caused by the energy required to supply consumers of electricity such as lighting systems, heating, ventilation and air conditioning (HVAC), and possibly many more. The first power demand may include thermal energy as well, for example used for heating a swimming pool. The actual power demand of the accommodation facilities does not change much over time. For example, it may vary by +/- 50 % or less. Even when situated in a port, the accommodation facilities will have a substantial power demand. The actual power demand of the accommodation facilities therefore always corresponds roughly to the first power demand. The first power demand corresponds substantially to a lowest power demand of the ship under regular operating conditions.

The propulsion system of the ship includes any energy consumers related to moving the ship, such as electromotors, thrusters, and stabilizers. All of these energy consumers may be supplied exclusively with electrical energy. The propulsion system has a second power demand, which depends largely on the cruising speed of the ship. When the ship is situated in a port or otherwise not in motion, the power demand of the propulsion system is zero or almost zero, while at cruising speed, the power demand of the propulsion system may exceed the power demand of the accommodation facilities by a large factor. The actual power demand of the propulsion system, corresponds to the second power demand only if the ship is driving at maximum speed, while it is in all other conditions substantially lower.

The first fuel cell unit and the second fuel cell unit may each include any number of fuel cells, typically arranged in stacks and/or modules and/or a fuel cell bank. All fuel cells comprised in the first fuel cell unit form a first entity defined by their common purpose and/or location, while all fuel cells comprised in the second fuel cell unit form a second, separate entity. It is also possible to provide the first fuel cell unit and the second fuel cell unit each within one or more separate housings or containers, although this is not required.

The first fuel cell unit has a first rated power defined by its total power output when operated at a nominal power. The first rated power includes the electrical power output and the thermal power output of the first high-temperature fuel cell unit. The first rated power corresponds to the first power demand. This means the power provided by operating the first fuel cell unit at nominal load will roughly equal the power required by the accommodation facilities. Inevitable fluctuations can be covered by a storage means for electrical energy, in particular a battery bank, so that it is possible to operate the first fuel cell unit on an approximately constant basis for extended periods of time, no matter whether the ship stays in port or is underway.

The second high-temperature fuel cell unit has a second rated power corresponding to the second power demand. This means the second high-temperature fuel cell unit, when operated at nominal power, provides sufficient energy to supply the propulsion system under full load.

The power plant comprises a primary heating/cooling circuit that uses a non-reacting heating/cooling fluid for heating/cooling the fuel cell units. The heating/cooling fluid is circulated in a closed system and does not take part in any of the chemical reactions carried out in the fuel cell units.

The thermal coupling between the primary heating/cooling circuit and the first and second fuel cell units means heat can be exchanged between the heating/cooling fluid and each of the fuel cell units. To this end, the heating/cooling fluid can be guided through heat exchangers such as radiators, for example, arranged within insulated housings of the respective fuel cell unit. In the alternative or in addition, the heating/cooling fluid may be guided directly through the individual fuel cells, in particular through heating/cooling plates arranged within stacks of fuel cells and comprising passages for the heating/cooling fluid.

The primary heating/cooling circuit also comprises flow control means such as one or more pumps and one or more valves allowing to control the flow of the heating/cooling fluid, so that heat can be transferred systematically as desired.

The power plant further includes a controller for controlling operation of the power plant. This controller may control operation of the entire power plant. In particular, the controller is adapted to control reactant supply to both fuel cell units, so that the power levels of both fuel cell units can be controlled individually by the controller. The controller is also adapted to control the flow control means, so that it can influence heat transfer effected by the primary heating/cooling circuit.

In particular, the controller is adapted to operate the power plant in a first operating mode. In this first operating mode, the first fuel cell unit is operated at the first rated power, so that the first power demand of the accommodation facilities is covered. In the first operating mode, no reactants are supplied to the second fuel cell unit, so that the second fuel cell unit essentially does not provide any output power. However, the second fuel cell unit is maintained at a first elevated temperature by means of the primary heating/cooling circuit, which is controlled so that heat from the first fuel cell unit, which is operating at rated power, is transferred to the second fuel cell unit. The first elevated temperature essentially corresponds to the operating temperature of the second fuel cell unit.

The operating temperature of the first and second fuel cell units may be for example in a range of 500°C to 900°C, in particular in a range of 600°C to 700°C. The exact operating temperature depends on the type of fuel cell. For example, the first fuel cell unit and the second fuel cell unit may comprise solid oxide fuel cells (SOFC) operated at a fuel cell operating temperature T1 of about 650°C.

The fuel cells used in the first and second fuel cell units may be of direct or indirect type. Fuel cells of indirect type can be operated with hydrogen rich gas prepared in an external reformer system. Fuel cells of direct type may be supplied with a liquid fuel directly, for example with a mixture of methanol and water.

An important advantage of the invention is that the second fuel cell unit in the first operating mode is maintained in a standby mode, so that it can be powered up in a very short time. This means the propulsion system of the ship can be used very flexibly, comparable with a conventional propulsion system powered by a combustion engine. Long start up periods of up to 24 hours of high temperature fuel cells are overcome.

Another advantage of the invention is that thermal cycling of the fuel cell units is almost entirely eliminated, because the first fuel cell unit based on the largely constant power demand of the accommodation facilities will be always on, while the second fuel cell unit will remain in the standby- or on-mode, and therefore will be maintained constantly at elevated temperature close to the operating temperature.

Using a separate heating/cooling circuit (the primary heating/cooling circuit) has the additional advantage that the temperature of the fuel cell units can be controlled independently from the fuel cell unit's power levels, and also more efficiently than when supplying e.g. heated air for controlling temperature.

In an aspect, the heating/cooling fluid is a liquid metal. By using a liquid metal, the primary heating/cooling circuit can be operated with a high mass transfer rate and a significantly lower energy demand for circulation of the heating/cooling fluid as compared to an air-cooled system, in particular. A suitable metal is sodium potassium alloy (NaK) having a liquid state temperature range between -12.6°C and 785°C and a density of 866 kg/m³ at 21°C.

In an aspect, the flow control means is adapted and arranged such that a flow direction in a segment of the primary heating/cooling circuit thermally coupled to the second fuel cell unit can be reversed by the controller. In the first operating mode, the flow will be controlled to have a first flow direction in which the heating/cooling liquid flows from the first fuel cell unit (possibly via a collector such as a hot stream manifold) towards the second fuel cell unit. In other operating modes, in which the second fuel cell unit is operating at a non-zero power level, the flow direction of will be reversed such that cooler heating/cooling fluid, e.g. from a cooled stream manifold of the primary heating/cooling circuit, is guided through the second fuel cell unit. To allow for reversing the flow direction, the flow control means may include a pump with reversible flow direction, a set of pumps arranged in opposite flow directions, and/or a suitable arrangement of valves and conduits.

In an aspect, the power plant comprises a reformer system adapted to be supplied with thermal energy from the primary heating/cooling circuit. The reformer system may include an evaporator section, a pre-heater section and a reformer section, so that the respective liquid fuel mixture is converted to hydrogen rich gas in stages. The reformer system, in order to provide the required amount of hydrogen rich gas, has a significant power demand that can be covered by the thermal energy available in the primary heating/cooling circuit. An operating temperature of the reformer system depends on the catalyst and may be in the range of 200 °C to 300 °C, for example about 250 °C, for platinum catalyst or, for example, in a range of 300 °C to 700 °C, such as about or above 350 °C, for non-precious catalyst.

In an aspect, the reformer system comprises a secondary heating/cooling circuit which is coupled to the primary heating/cooling circuit via a first heat exchanger and comprises a heating/cooling fluid, in particular a liquid metal. The heating/cooling fluid can be selected based on the desired reforming temperature. For reforming temperatures of for example 300 °C or less, a standard motor oil could be used. A liquid metal may be used in particular for higher reforming temperatures. The liquid metal may comprise NaK as has been explained with regard to the primary heating/cooling circuit. The secondary heating/cooling circuit may include flow control means controlled by the controller of the power plant. Using a separate heating/cooling circuit for distributing the thermal energy in the reformer system is particularly efficient, because the temperature can be controlled more precisely. Also, only those amounts of thermal energy required for heating the reformer system are drawn from the primary heating/cooling circuit. For example, the reformer system can be operated at a reformer operating temperature T2 somewhat below the fuel cell operating temperature T1, for example at a temperature of about 500°C.

In an aspect, the primary heating/cooling circuit comprises a controllable bypass for the first heat exchanger. By means of this bypass, the heat transfer between the primary heating/cooling circuit and the secondary heating/cooling circuit can be reduced or even completely stopped depending on the requirements. As to heat transfer from the secondary heating/cooling circuit to the reformer system, the heating/cooling fluid can be circulated directly through suitable passages within the reformer system and/or the reformer system can be placed in one or more insulated containers which are heated by radiators supplied by the secondary heating/cooling circuit.

In an aspect, the reformer system includes a first reformer subsystem dimensioned to match the first fuel cell unit and a second reformer subsystem dimensioned to match the second fuel cell unit, wherein in the first operating mode, the controller controls thermal energy supply to the reformer system such that the second reformer subsystem is maintained at a second elevated temperature. "Dimensioned to match" means the reformer subsystem has a reforming capacity sufficient to provide the amount of e.g. hydrogen-rich gas to cover the demand of the related fuel cell unit at rated power. This approach allows to shorten ramp up time of the second fuel cell unit even further, because the corresponding reformer subsystem is also maintained at or close to operating temperature. It is an option to connect the respective reformer subsystem directly to the related fuel cell unit, but the system will have higher redundancy when the hydrogen-rich gas from various reformer subsystems can be used by various fuel cell units, which can be implemented e.g. by means of a suitable manifold collecting the output of one or more reformer subsystems. The reformer subystems may each consist of one or more subunits.

In an aspect, the power plant comprises a steam turbine supplied with steam from a boiler which is thermally coupled to the primary heating/cooling circuit, wherein the steam turbine is connected to an electricity generator, in particular to a variable-torque electricity generator. The steam turbine is operated in particular in a Rankine cycle with water. Excess heat of the first and second fuel cell units in this way can be converted into valuable electricity. Using a variable-torque electricity generator has the advantage that the steam turbine can be operated at various partial loads of the power plant with high efficiency. Even if the second fuel cell unit is in standby or operating at low power output, and only little steam is available, the torque of the variable-torque generator can be reduced so that the steam turbine can still be operated with constant or almost constant efficiency. Another advantage of using a variable-torque generator is that when ramping up power output of the second fuel cell unit, the fast increase of available thermal energy can be efficiently converted into electricity without delay.

In an aspect, the steam turbine and the electricity generator are dimensioned such that they can be operated when the power plant is in the first operating mode. This means the amount of steam obtainable from the excess heat of the power plant originating from operation of the first fuel cell unit only is sufficient to keep the steam turbine in operation.

In an aspect, a steam output of the steam turbine is connected to a heat exchanger supplying heat to a reverse electrodialysis heat engine (REDHE). The reverse electrodialysis heat engine comprises a container filled with solutions of different salinity separated by a semi-permeable membrane. The aim of the device is electricity generation from salinity gradient of the two solutions, using low grade heat between 50-100 °C to restore the initial salinity content of the solutions in a closed loop. The setup allows full control of the environment, eliminating some drawbacks of the open loop applications, such as location dependent salinity content in streams and pretreatment needs. Furthermore, different salt solutions offer significantly higher power density than sodium chloride (NaCl).

In an aspect, the ship comprises a fuel supply system with a fuel mixer, a methanol tank, a methanol pump adapted and arranged to pump methanol from the methanol tank to the fuel mixer, a water supply and a water pump adapted and arranged to pump water from the water supply to the fuel mixer, wherein the fuel mixer is adapted and arranged to prepare a mixture of methanol and water and to provide this mixture as a fuel for supplying the first fuel cell unit and/or the second fuel cell unit . In this aspect, the fuel cell units are operated with a mixture of methanol and water prepared onboard of the ship by the fuel mixer. The capacity of the methanol pump and the water pump can be dimensioned to match the overall fuel consumption of the power plant, i.e. when the first fuel cell unit is operated at the first rated power and the second fuel cell unit is operated at the second rated power. The fuel can be supplied to the fuel cell units directly and/or via a fuel manifold connected to both fuel cell units. The pressure required for transporting the fuel to the fuel cell units can be provided by the methanol pump and the water pump. In this case, there is no need for a separate fuel pump, so the fuel supply can be carried out with high efficiency.

In an aspect, the fuel supply system comprises a fuel tank connected to the fuel mixer and a fuel pump adapted and arranged to pump fuel from the fuel tank to the first fuel cell unit and/or the second fuel cell unit, wherein the fuel pump is dimensioned to match the fuel consumption of the first fuel cell unit when operated at the first rated power. The fuel tank may have limited capacity, such as for example for one hour or one day of ship operation. The fuel pump can be dimensioned such that it provides just the amount of fuel required by the first fuel cell unit. In the first operating mode, it is then sufficient to operate only the fuel pump, while the methanol pump and the water pump can be switched off. Fuel can therefore be supplied with correspondingly low power demand, further increasing the power plant's overall efficiency. Once the fill level of the fuel tank falls short of a minimum level, the methanol pump and the water pump are switched on to refill the fuel tank. During this filling period, the methanol and water pumps can be operated at their most energy-efficient power level.

In an aspect, and exhaust stream of the first high-temperature fuel cell unit and/or of the second high-temperature fuel cell unit is guided to a product retrieval system comprising a water outlet, the water outlet in particular being connected to a water tank of the ship, and a carbon dioxide outlet. The exhaust stream in particular is an anode-side exhaust stream of the first and/or second high-temperature fuel cell unit. The products exiting the first and/or second high-temperature fuel cell unit at the anode-side in particular include carbon dioxide and water as well as trace amounts of hydrogen and methanol. The product retrieval system is adapted to retrieve these products from the exhaust stream. The product retrieval system comprises a water outlet providing the retrieved water, and a carbon dioxide outlet providing the retrieved carbon dioxide. Both components can be used on board of the ship. To this end, the water may be guided into a water tank of the ship, such as a drinking water tank or a utility water tank.

In an aspect, the carbon dioxide outlet is connected to a first pressurizing system providing low pressure carbon dioxide and connected to a tank of the ship such that the tank can be filled with a carbon dioxide blanket, and/or the carbon dioxide outlet is connected to a second pressurizing system providing high pressure carbon dioxide and comprising a carbon dioxide storage vessel, and/or the ship comprises a carbon dioxide shore connector adapted to enable carbon dioxide supply to a shore network. Carbon dioxide is an inert gas and can be used to create a protective atmosphere in fuel tanks, and/or other enclosed volumes in the vessel possibly containing explosive fuel air mixtures. When using carbon dioxide instead of nitrogen, no additional devices for extracting and compressing nitrogen from air are required. The carbon dioxide can also be pressurized and stored in a pressure vessel on board the vehicle and/or supplied to a shore network. There, the carbon dioxide can be used as a valuable raw material, e.g. for fuel synthesis. Moreover, this arrangement results in zero carbon emissions to atmosphere during port time. The carbon dioxide shore connector can form a bypass for all the extra carbon dioxide volume produced during operation, which the ship has no use for and which can be released under near atmospheric pressure to a shore network. In absence of such a network, the carbon dioxide can also be released to atmosphere, if desired via the carbon dioxide shore connector or, for example, via an exhaust.

In an aspect, the product retrieval system comprises a first condenser adapted to be operated at a temperature above 65°C and to provide pure water at the water outlet, and/or the product retrieval system comprises a second condenser adapted to be operated at ambient temperature and to provide pure carbon dioxide at the carbon dioxide outlet. By means of the first condenser, only water is extracted from the exhaust stream, because the trace amounts of methanol will not condense at the operating temperature of the first condenser (which is selected above the methanol boiling temperature). Using the first condenser, therefore, is a simple and efficient means to obtain almost perfectly pure/distilled water from the exhaust stream. When a second condenser is operated at ambient temperature, for example by means of a sea water cooling mechanism, it is ensured that almost all methanol and humidity content of the gas stream is condensed, so that almost pure carbon dioxide (at least a carbon dioxide rich gas) is obtained. The liquid condensing at the second condenser is a mixture of water and methanol and can be used in particular as water supply for the reformer system. Even the relatively small amounts of methanol included in the mixture will then be recycled and used to power the fuel cell units.

In the following, the invention is explained in detail with reference to an embodiment shown in figures.
- Fig. 1: shows a ship with a power plant in a schematic drawing,
- Fig. 2: shows a heat management diagram of the power plant, and
- Fig. 3: shows a fuel and exhaust management diagram of the power plant.

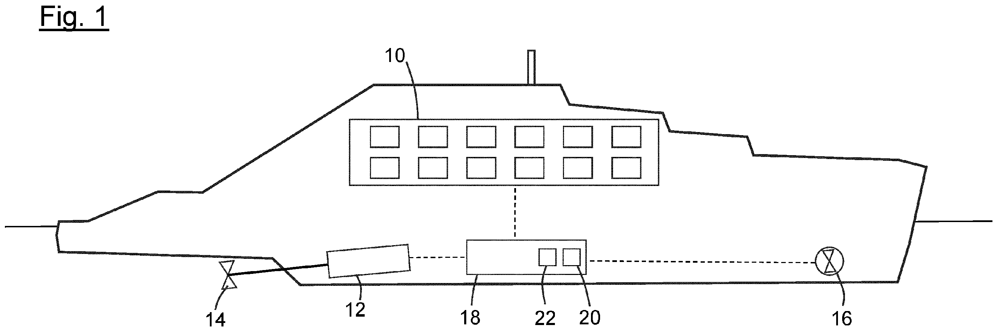

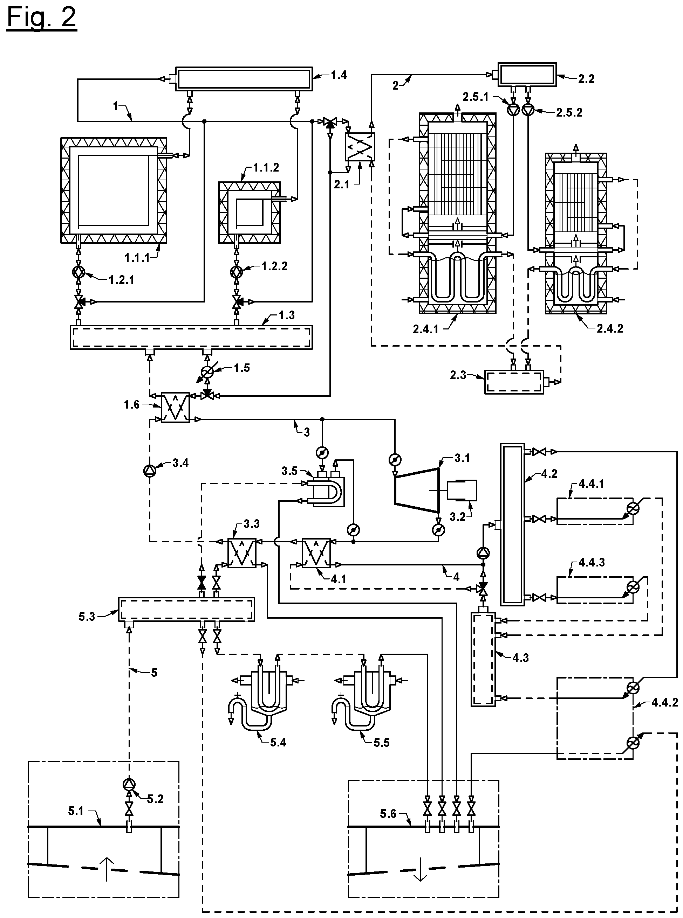

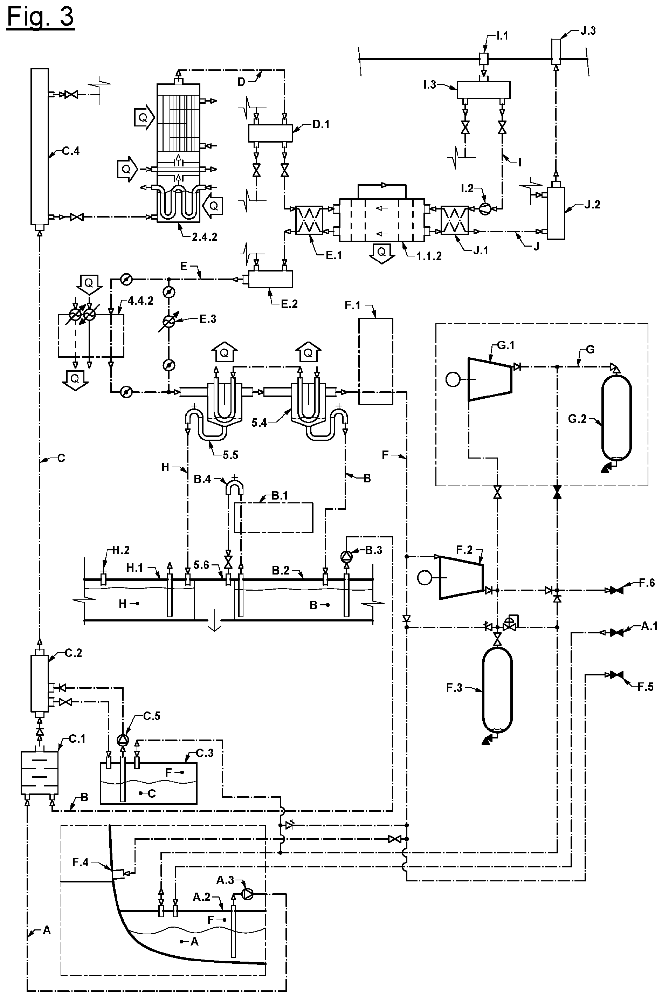

The ship shown in Fig. 1 comprises accommodation facilities 10 including among other things passenger and crew cabins with a lighting system and an HVAC-system. The ship's propulsion system includes an electric motor 12 driving a main propeller 14, and further includes a thruster 16, also powered by an electric motor. The accommodation facilities 10 in the example have a first power demand of about 100 kW. The propulsion system has a second power demand of 2.000 kW. These figures, however, will vary largely for different types of ships. A cruise ship, for example, may have a first power demand being equal to or even larger than its second power demand. The ship further comprises a power plant 18 with a controller 20 and a battery bank 22. The details of the power plant 18 will be explained with reference to the diagrams of Figs. 2 and 3.

Figure 2 shows a schematic diagram illustrating the power plant 18 with a focus on heat management. The power plant 18 comprises a first high-temperature fuel cell unit 1.1.2 and a second high-temperature fuel cell unit 1.1.1. Both are thermally coupled to a primary heating/cooling circuit 1. The primary heating/cooling circuit 1 comprises sodium potassium alloy (NaK) as a cooling fluid, and is typically operated at a temperature of about 650°C. In the embodiment shown, both fuel cell units 1.1.1 and 1.1.2 are solid oxide fuel cell units. The primary heating/cooling circuit 1 further comprises a hot stream manifold 1.4 and a cooled stream manifold 1.3.

A first reversible flow pump 1.2.2 controls the flow of the heating/cooling fluid of the primary heating/cooling circuit 1 passing through the first fuel cell unit 1.1.2. A second reversible flow pump 1.2.1 controls the flow of the heating/cooling liquid through the second fuel cell unit 1.1.1. When the pumps 1.2.1 and 1.2.2 are operated in a first flow direction, the heating/cooling fluid will flow through the respective fuel cell unit 1.1.1, 1.2.2 and then into the hot stream manifold 1.4. With this flow direction, the heating/cooling fluid passing through the respective fuel cell unit 1.1.1, 1.1.2 will transport heat away from the respective fuel cell unit 1.1.1, 1.1.2. The heated cooling/heating fluid is collected in the hot stream manifold 1.4, so that the heat can be made use of as will be explained further below.

When the flow direction of one of the pumps 1.2.1, 1.2.2 is reversed, the heating/cooling liquid will flow in the other direction, from the hot stream manifold 1.4 through the respective fuel cell unit 1.1.1, 1.1.2 through the pump, before it returns into the hot stream pipe between the hot stream manifold 1.4 and heat exchanger 2.1. This means the respective fuel cell unit 1.1.1, 1.1.2 cannot only be cooled but also be heated by the heating/cooling liquid.

In particular, in the first operating mode of the power plant 18, only the first fuel cell unit 1.1.2 will be operated to produce electrical and thermal energy, and will be cooled by operating the first pump 1.2.2 in the first flow direction, so that heat is transferred to the hot stream manifold 1.4. The second fuel cell unit 1.1.1 will not be supplied with reactants, so that it does not produce thermal or electrical energy. The second pump 1.2.1 will be operated with a second flow direction, so that heated heating/cooling liquid from the hot stream manifold 1.4 will be passed through the second fuel cell unit 1.1.1, so that the latter is maintained at elevated temperature close to the preferred operating temperature of the second fuel cell unit 1.1.1.

Also included within the primary heating/cooling circuit 1, there is shown a first heat exchanger 2.1 through which heat can be exchanged with a second heating/cooling circuit 2. The primary heating/cooling circuit 1 also comprises a bypass 1.7 by which the heating/cooling fluid of the primary heating/cooling circuit 1 can pass by the first heat exchanger 2.1, controlled by a valve.

Also integrated into the primary heating/cooling circuit 1 is a boiler 1.6 through which the heated cooling/heating liquid of the primary heating/cooling circuit 1 from the hot stream manifold 1.4 can be guided through. From the boiler 1.6, the heating/cooling liquid is returned into the cooled stream manifold 1.3.

Further, the primary heating/cooling circuit 1 includes an electric heater 1.5 which allows starting up the power plant 18 by providing heat to the primary heating/cooling circuit 1.

The fuel cell units 1.1.1 and 1.1.2 are of the indirect type, so that they are operated with hydrogen rich gas coming out of the reformer system shown to the top right of Fig. 2. The reformer system includes a first reformer subsystem 2.4.2 and a second reformer subsystem 2.4.1. The first reformer subsystem 2.4.2 is dimensioned such that it can provide the amount of hydrogen rich gas required to operate the first high-temperature fuel cell unit 1.1.2. The second reformer subsystem 2.4.1 is dimensioned such that it can provide the amount of hydrogen rich gas required to operate the second high-temperature fuel cell unit 1.1.1.

Each of the reformer subsystems 2.4.1, 2.4.2 includes a lower section with an evaporator, a midsection with a pre-heater and an upper section with a reformer. Both reformer subsystems 2.4.1, 2.4.2 are integrated into the secondary heating/cooling circuit 2 which includes a hot stream manifold 2.2 and a return manifold 2.3. The secondary heating/cooling circuit 2 is also using sodium potassium alloy (NaK) as heating/cooling fluid, and is typically operated at a temperature of about up to 500 °C. The temperature may also be higher, such as about up to 550°C or about up to 600 °C or even more.

Superheated steam provided by the boiler 1.6 is used in a Rankine cycle 3 which comprises a steam turbine 3.1 driving a variable-torque generator 3.2. After having passed the steam turbine 3.1, the steam is guided through a process heater 4.1 which provides heat to a fourth heating/cooling circuit using oil in a temperature range of about 90°C to about 200°C as a heating/cooling fluid. After having passed through the process heater 4.1, the steam of the Rankine cycle 3 is passed through a condenser 3.3, from where it is pumped by a pump 3.4 back to the boiler 1.6.

The Rankine cycle 3 further includes a cooling heat-exchanger 3.5 as a bypass of the steam turbine 3.1, in particular to provide reserve cooling capacity for cooling the primary heating/cooling circuit 1, shall the steam turbine 3.1 be inoperable.

The fourth heating/cooling circuit 4 includes the heat exchanger 4.1 as a process heater. The heated oil is collected at hot stream manifold 4.2, from which a reverse electrodialysis heat engine (REDHE) 4.4.1 and any other suitable heat demands 4.4.3 are supplied with heat. Excess heat from the hot stream manifold 4.2 can be supplied to an absorption chiller 4.4.2. The fourth heating/cooling circuit 4 further includes a return manifold 4.3 from where the cooled oil is returned to the process heater 4.1. The absorption chiller 4.4.2 can be used to produce chilled water and helps to reduce the net electric consumption of the ship.

The heat management diagram further shows a seawater cooling circuit 5 operated with water as a cooling fluid. It includes a supply-side sea chest 5.1 and a seawater pump 5.2 for pumping seawater into a cooling manifold 5.3. This cooling manifold 5.3 is at ambient (seawater) temperature. From the cooling manifold 5.3, the water can be passed through the cooling heat exchanger 3.5 and back into the sea through the discharge side sea chest 5.6.

The seawater from the cooling manifold 5.3 can also be used for cooling the absorption chiller 4.4.2. In addition, water from the cooling manifold 5.3 can be passed through a second condenser 5.4 operated at or close to ambient temperature.

After having passed the second condenser 5.4, the slightly heated seawater is passed through the first condenser 5.5, which is operated at a temperature above 65°C. The first condenser 5.5 and the second condenser 5.4 can also be provided as a combined condenser comprising different sections operated at the different temperature levels.

Figure 3 shows a schematic diagram illustrating the power plant 18 with a focus on fuel and exhaust management. It will be explained following the flow of the fuel components and products.

The ship comprises a methanol supply A filled with methanol at ambient temperature and including a methanol bunkering inlet A.1 and methanol tank A.2. Methanol from the methanol tank A.2 is pumped with a methanol pump A.3 to a fuel mixer C.1. In the fuel mixer C.1, the methanol is mixed with water from water supply B. The fuel mixture is then guided into a fuel mixture tank C.2 and from there through fuel mix supply line C to a fuel mixture distribution manifold C.4.

From the fuel mixture distribution manifold C.4, the fuel mixture is guided to the reformer system. Only the first reformer subsystem 2.4.2 is shown in the diagram.

A fuel mixture pump C.5 is provided to supply mixed fuel directly from the fuel mixture tank C.3 without need for operating the main pumps, namely methanol pump A.3 and water pump B.3. The fuel mixture pump C.5 is dimensioned for partial power output, corresponding to the demand of the first fuel cell unit 1.1.2 at the first rated power. The main pumps A.3 and B.3 are rated for full power of the plant.

At the outlet of the first reformer subsystem 2.4.2, hydrogen rich gas D is provided at temperature T2, including hydrogen, carbon dioxide and water, as well as trace amounts of methanol, carbon monoxide and methane. The hydrogen rich gas D is collected by hydrogen rich gas manifold D.1 (to which additional reformer subsystems may be connected, which are not shown in Fig. 3) and passed for further heating through a fuel cell anode heat exchanger E.1 and then, at or close to temperature T1, into the first high-temperature fuel cell unit 1.1.2, where it is reacted with air I.

The air I is originating from air intake I.1 and is transported via air supply manifold I.3 by an air fan I.2 through a fuel cell cathode heat exchanger J.1, where it is heated and then guided into the cathode side of the first high-temperature fuel cell unit 1.1.2. The cathode products J produced at the cathode of the first high-temperature fuel cell unit 1.1.2 are used for supplying heat to the fuel cell cathode heat exchanger J.1. They include air and nitrogen and are collected in an exhaust gas manifold J.2 and then vented to the atmosphere at the exhaust J.3.

The anode products E of the first high-temperature fuel cell unit 1.1.2 (and also of the second high-temperature fuel cell unit 1.1.1. not shown in Fig. 3) include mainly carbon dioxide and water and are passed through fuel cell anode heat exchanger E.1 into an exhaust stream manifold E.2. Then, the anode products are passed through an absorption chiller 4.4.2 and then through the first condenser 5.5 and the second condenser 5.4, which are connected in series. The absorption chiller 4.4.2 can also be bypassed through the absorption chiller bypass which may be fitted with pre-cooling E.3.

After having passed the second condenser 5.4, the remaining, gaseous part of the anode products E consists of almost pure carbon dioxide F, which is passed through an optional gas purification system F.1.

The carbon dioxide F is pressurised using compressor F.2 and supplied to the inerting system. This contains an inert gas storage F.3 and pipes guided to the methanol tank A.2 and to the fuel tank C.3 (which contain fuel mixture provided by the fuel mixer C.1 through the fuel manifold C.2). In both tanks A.2, C.3, the carbon dioxide forms a carbon dioxide blanket over the methanol or fuel mixture, respectively.

When underway, the excess carbon dioxide is vented to atmosphere via carbon dioxide release F.4.

Carbon dioxide F from the low pressure carbon dioxide compressor F.2 can also be passed on to the high pressure carbon dioxide compressor G.1 and then stored as high pressure carbon dioxide G in a high pressure vessel G.2.

It is also possible to guide the excess carbon dioxide to a carbon dioxide shore network discharge F.5 when in port. The carbon dioxide of the carbon dioxide blankets within the methanol tank A.2 as well as the optional pressurized carbon dioxide storage system G can be discharged separately through carbon dioxide discharge F.6.

The first condenser 5.5 has a water outlet supplying almost pure/distilled water H to a distilled water tank H.1 including a breather H.2 to atmosphere. The second condenser 5.4 has a water outlet supplying water B including some methanol in a water collector B.2. From the water collector B.2, the water B is recycled by means of a water pump B.3 to the fuel mixer C.1. Water from the water collector B.2 can be discharged through an optional water purification system B.1 via a water overflow B.4 to sea.

### List of reference numerals

- 10: accommodation facilities
- 12: electric motor
- 14: main propeller
- 16: thruster
- 18: power plant
- 20: controller

- T0: ambient temperature
- T1: fuel cell operating temperature
- T2: reformer operating temperature

- 1: primary heating/cooling circuit (NaK @ T1)
- 1.1.1: second high-temperature fuel cell unit (propulsion)
- 1.1.2: first high-temperature fuel cell unit (accommodation)
- 1.2.1: pump (reversible flow)
- 1.2.2: pump (reversible flow)
- 1.3: cooled stream manifold (NaK @ T<T1)
- 1.4: hot stream manifold (NaK)
- 1.5: electric heater
- 1.6: boiler
- 1.7: bypass

- 2: secondary heating/cooling circuit (NaK @ T2)
- 2.1: first heat exchanger (T2/T1)
- 2.2: hot stream manifold (NaK)
- 2.3: return manifold (NaK)

- 2.4.1: second reformer subsystem (propulsion)
- 2.4.2: first reformer subsystem (accommodation)
- 2.5.1: pump (propulsion)
- 2.5.2: pump (accommodation)

- 3: Rankine cycle (H2O)
- 3.1: Steam Turbine
- 3.2: Variable Torque Electricity Generator
- 3.3: Condenser
- 3.4: Pump
- 3.5: cooling heat exchanger (steam turbine bypass)

- 4: fourth heating/cooling circuit (oil @ 90 - 200 °C)
- 4.1: process heater
- 4.2: hot stream manifold (oil @ 90 °C)
- 4.3: return manifold (oil)
- 4.4.1: reverse electrodialysis heat engine (REDHE)
- 4.4.2: absorbtion chiller
- 4.4.3: other heat demand

- 5: sea water cooling circuit (H2O)
- 5.1: sea chest (supply)
- 5.2: sea water pump
- 5.3: cooling manifold (sea @ T0)
- 5.4: condenser 2 (@ T0)
- 5.5: condenser 1 (@ T>65 °C)
- 5.6: sea chest (discharge)

- A: methanol (CH3OH @ T0)
- A.1: methanol bunkering inlet
- A.2: methanol tank
- A.3: methanol pump

- B: water (H2O @ T0)
- B.1: water purification system
- B.2: water collector
- B.3: water pump
- B .4: water overflow (to sea)

- C: fuel mix supply line (@ T0: CH3OH + H2O )
- C.1: liquid fuel mixer
- C.2: fuel manifold
- C.3: fuel tank
- C.4: fuel mixture distribution manifold
- C.5: fuel mixture pump

- D: hydrogen rich gas (@ T2: H2, CO2, H2O; may contain trace amounts of CH3OH, CO and CH4)
- D.1: hydrogen rich gas manifold

- E: anode products (CO2, H2O)
- E.1: fuel cell anode heat exchanger (gas/gas)
- E.2: exhaust stream manifold
- E.3: absorbtion chiller bypass (with cooling 120 °C <Tout<160 °C)

- F: carbon dioxide (gas @ low pressure)
- F.1: gas purification system
- F.2: carbon dioxide compressor (low pressure)
- F.3: carbon dioxide pressure vessel (low pressure)
- F.4: carbon dioxide release to atmosphere
- F.5: carbon dioxide shore network discharge
- F.6: carbon dioxide discharge

- G: carbon dioxide (gas @ high pressure)
- G.1: carbon dioxide compressor (high pressure)
- G.2: carbon dioxide pressure vessel (high pressure)

- H: distilled water
- H.1: distilled water tank
- H.2: breather to atmosphere

- I: air
- I.1: air intake
- I.2: air fan
- I.3: air supply manifold

- J: cathode products (air, N2)
- J.1: fuel cell cathode heat exchanger (gas/gas)
- J.2: exhaust gas manifold
- J.3: exhaust to atmosphere

## Claims

1. A ship comprising accommodation facilities having a first power demand, a propulsion system having a second power demand, and a power plant, the power plant comprising:
• a first high-temperature fuel cell unit (1.1.2) having a first rated power corresponding to the first power demand,
• a second high-temperature fuel cell unit (1.1.1) having a second rated power corresponding to the second power demand,
• a primary heating/cooling circuit (1) comprising a non-reacting heating/cooling fluid and being thermally coupled to the first fuel cell unit (1.1.2) and to the second fuel cell unit (1.1.1), and a flow control means controlling flow of the heating/cooling fluid, and
• a controller adapted to control reactant supply to the first fuel cell unit (1.1.2), reactant supply to the second fuel cell unit (1.1.1) and to control the flow control means, wherein the controller is adapted to operate the power plant in a first operating mode in which the first fuel cell unit (1.1.2) is operated at the first rated power, no reactants are supplied to the second fuel cell unit (1.1.1) and the primary heating/cooling circuit (1) transfers heat from the first fuel cell unit (1.1.2) to the second fuel cell unit (1.1.1) so that the second fuel cell unit (1.1.1) is maintained at a first elevated temperature.

2. The ship of claim 1, wherein the heating/cooling fluid is a liquid metal.

3. The ship of claim 1 or 2, wherein the flow control means is adapted and arranged such that a flow direction in a segment of the primary heating/cooling circuit thermally coupled to the second fuel cell unit (1.1.1) can be reversed by the controller.

4. The ship of any of the claims 1 to 3, wherein the power plant comprises a reformer system adapted to be supplied with thermal energy from the primary heating/cooling circuit (1).

5. The ship of claim 4, wherein the reformer system comprises a secondary heating/cooling circuit (2) which is coupled to the primary heating/cooling circuit (1) via a first heat exchanger (2.1) and comprises a heating/cooling fluid, in particular a liquid metal.

6. The ship of claim 5, wherein the primary heating/cooling circuit (1) comprises a controllable bypass (1.7) for the first heat exchanger (2.1).

7. The ship of any of the claims 4 to 6, wherein the reformer system includes a first reformer subsystem (2.4.2) dimensioned to match the first fuel cell unit (1.1.2) and a second reformer subsystem (2.4.1) dimensioned to match the second fuel cell unit (1.1.1), wherein in the first operating mode, the controller controls thermal energy supply to the reformer system such that the second reformer subsystem (2.4.1) is maintained at a second elevated temperature.

8. The ship of any of the claims 1 to 7, wherein the power plant comprises a steam turbine (3.1) supplied with steam from a boiler (1.6) which is thermally coupled to the primary heating/cooling circuit (1), wherein the steam turbine (3.1) is connected to an electricity generator, in particular to a variable-torque electricity generator (3.2).

9. The ship of claim 8, wherein the steam turbine (3.1) and the electricity generator are dimensioned such that they can be operated when the power plant is in the first operating mode.

10. The ship of claim 8 or 9, wherein a steam output of the steam turbine (3.1) is connected to a heat exchanger (4.1) supplying heat to a reverse electrodialysis heat engine (4.4.1).

11. The ship of any of the claims 1 to 10, wherein the ship comprises a fuel supply system with a fuel mixer (C.1), a methanol tank (A.2), a methanol pump (A.3) adapted and arranged to pump methanol from the methanol tank (A.2) to the fuel mixer (C.1), a water supply (B) and a water pump (B.3) adapted and arranged to pump water from the water supply (B) to the fuel mixer (C.1), wherein the fuel mixer (C.1) is adapted and arranged to prepare a mixture of methanol and water and to provide this mixture as a fuel for supplying the first fuel cell unit (1.1.2) and/or the second fuel cell unit (1.1.1).

12. The ship of claim 11, wherein the fuel supply system comprises a fuel tank (C.3) connected to the fuel mixer (C.1) and a fuel pump (C.5) adapted and arranged to pump fuel from the fuel tank (C.3) to the first fuel cell unit (1.1.2) and/or the second fuel cell unit (1.1.1), wherein the fuel pump (C.5) is dimensioned to match the fuel consumption of the first fuel cell unit (1.1.2) when operated at the first rated power.

13. The ship of any of the claims 1 to 12, wherein an exhaust stream of the first high-temperature fuel cell unit (1.1.2) and/or of the second high-temperature fuel cell unit (1.1.1) is guided to a product retrieval system comprising a water outlet, the water outlet in particular being connected to a water tank of the ship, and a carbon dioxide outlet.

14. The ship of claim 13, wherein the carbon dioxide outlet is connected to a first pressurizing system providing low pressure carbon dioxide and connected to a tank of the ship such that the tank can be filled with a carbon dioxide blanket, and/or the carbon dioxide outlet is connected to a second pressurizing system providing high-pressure carbon dioxide and comprising a carbon dioxide storage vessel and/or the ship comprises a carbon dioxide shore connector adapted to supply carbon dioxide to a shore network.

15. The ship of claim 13 or 14, wherein the product retrieval system comprises a first condenser adapted to be operated at a temperature above 65 °C and to provide pure water at the water outlet, and/or wherein the product retrieval system comprises a second condenser adapted to be operated at ambient temperature and to provide almost pure carbon dioxide at the carbon dioxide outlet.

## Patentansprüche

1. Schiff, das Unterbringungsmöglichkeiten mit einem ersten Leistungsbedarf, ein Antriebssystem mit einem zweiten Leistungsbedarf und ein Kraftwerk umfasst, wobei das Kraftwerk Folgendes umfasst:
• eine erste Hochtemperatur-Brennstoffzelleneinheit (1.1.2), die eine erste Nennleistung aufweist, die dem ersten Leistungsbedarf entspricht,
• eine zweite Hochtemperatur-Brennstoffzelleneinheit (1.1.1), die eine zweite Nennleistung aufweist, die dem zweiten Leistungsbedarf entspricht,
• einen primären Heiz-/Kühlkreislauf (1), der ein nicht reagierendes Heiz-/Kühlfluid umfasst und thermisch mit der ersten Brennstoffzelleneinheit (1.1.2) und der zweiten Brennstoffzelleneinheit (1.1.1) gekoppelt ist, und ein Durchflusssteuerungsmittel umfasst, das einen Durchfluss des Heiz-/Kühlfluids steuert, und
• eine Steuerung, die so ausgelegt ist, dass sie eine Reaktionsmittelzufuhr zu der ersten Brennstoffzelleneinheit (1.1.2) steuert, eine Reaktionsmittelzufuhr zu der zweiten Brennstoffzelleneinheit (1.1.1) steuert, und so, dass sie das Durchflusssteuerungsmittel steuert, wobei die Steuerung so ausgelegt ist, dass sie das Kraftwerk in einem ersten Betriebsmodus betreibt, in dem die erste Brennstoffzelleneinheit (1.1.2) mit der ersten Nennleistung betrieben wird, der zweiten Brennstoffzelleneinheit (1.1.1) keine Reaktionsmittel zugeführt werden und der primäre Heiz-/Kühlkreislauf (1) Wärme von der ersten Brennstoffzelleneinheit (1.1.2) auf die zweite Brennstoffzelleneinheit (1.1.1) überträgt, sodass die zweite Brennstoffzelleneinheit (1.1.1) auf einer ersten erhöhten Temperatur gehalten wird.

2. Schiff nach Anspruch 1, wobei das Heiz-/Kühlfluid ein Flüssigmetall ist.

3. Schiff nach Anspruch 1 oder 2, wobei das Durchflusssteuerungsmittel so ausgelegt und eingerichtet ist, dass eine Durchflussrichtung in einem Segment des primären Heiz-/Kühlkreislaufs, das thermisch mit der zweiten Brennstoffzelleneinheit (1.1.1) gekoppelt ist, mittels der Steuerung umgekehrt werden kann.

4. Schiff nach einem beliebigen der Ansprüche 1 bis 3, wobei das Kraftwerk ein Reformersystem umfasst, das so ausgelegt ist, dass es mit thermischer Energie aus dem primären Heiz-/Kühlkreislauf (1) versorgt wird.

5. Schiff nach Anspruch 4, wobei das Reformersystem einen sekundären Heiz-/Kühlkreislauf (2) umfasst, der über einen ersten Wärmetauscher (2.1) mit dem primären Heiz-/Kühlkreislauf (1) gekoppelt ist und ein Heiz-/Kühlfluid, insbesondere ein Flüssigmetall, umfasst.

6. Schiff nach Anspruch 5, wobei der primäre Heiz-/Kühlkreislauf (1) einen steuerbaren Bypass (1.7) für den ersten Wärmetauscher (2.1) umfasst.

7. Schiff nach einem beliebigen der Ansprüche 4 bis 6, wobei das Reformersystem ein erstes Reformer-Teilsystem (2.4.2), das so dimensioniert ist, dass es zu der ersten Brennstoffzelleneinheit (1.1.2) passt, und ein zweites Reformer-Teilsystem (2.4.1), das so dimensioniert ist, dass es zu der zweiten Brennstoffzelleneinheit (1.1.1) passt, umfasst, wobei die Steuerung die Zufuhr thermischer Energie zu dem Reformersystem in dem ersten Betriebsmodus so steuert, dass das zweite Reformer-Teilsystem (2.4.1) auf einer zweiten erhöhten Temperatur gehalten wird.

8. Schiff nach einem beliebigen der Ansprüche 1 bis 7, wobei das Kraftwerk eine Dampfturbine (3.1) umfasst, die mit Dampf aus einem Kessel (1.6), der thermisch mit dem primären Heiz-/Kühlkreislauf (1) gekoppelt ist, versorgt wird, wobei die Dampfturbine (3.1) mit einem Stromerzeuger, insbesondere mit einem Stromerzeuger (3.2) mit variablem Drehmoment, verbunden ist.

9. Schiff nach Anspruch 8, wobei die Dampfturbine (3.1) und der Stromerzeuger so dimensioniert sind, dass sie betrieben werden können, wenn sich das Kraftwerk in dem ersten Betriebsmodus befindet.

10. Schiff nach Anspruch 8 oder 9, wobei ein Dampfausgang der Dampfturbine (3.1) mit einem Wärmetauscher (4.1) verbunden ist, der einer Wärmekraftmaschine (4.4.1) für umgekehrte Elektrodialyse Wärme zuführt.

11. Schiff nach einem beliebigen der Ansprüche 1 bis 10, wobei das Schiff ein Brennstoffzuführsystem mit einem Brennstoffmischer (C.1), einem Methanoltank (A.2), einer Methanolpumpe (A.3), die so ausgelegt und eingerichtet ist, dass sie Methanol aus dem Methanoltank (A.2) in den Brennstoffmischer (C.1) pumpt, einem Wasservorrat (B) und einer Wasserpumpe (B.3), die so ausgelegt und eingerichtet ist, dass sie Wasser aus dem Wasservorrat (B) in den Brennstoffmischer (C.1) pumpt, umfasst, wobei der Brennstoffmischer (C.1) so ausgelegt und eingerichtet ist, dass er ein Gemisch aus Methanol und Wasser herstellt und dieses Gemisch als einen Brennstoff zur Versorgung der ersten Brennstoffzelleneinheit (1.1.2) und/oder der zweiten Brennstoffzelleneinheit (1.1.1) bereitstellt.

12. Schiff nach Anspruch 11, wobei das Brennstoffzuführsystem einen Brennstofftank (C.3), der mit dem Brennstoffmischer (C.1) verbunden ist, und eine Brennstoffpumpe (C.5), die so ausgelegt und eingerichtet ist, dass sie Brennstoff aus dem Brennstofftank (C.3) in die erste Brennstoffzelleneinheit (1.1.2) und/oder die zweite Brennstoffzelleneinheit (1.1.1) pumpt, umfasst, wobei die Brennstoffpumpe (C.5) so dimensioniert ist, dass sie zu dem Brennstoffverbrauch der ersten Brennstoffzelleneinheit (1.1.2), wenn diese mit der ersten Nennleistung betrieben wird, passt.

13. Schiff nach einem beliebigen der Ansprüche 1 bis 12, wobei ein Abgasstrom der ersten Hochtemperatur-Brennstoffzelleneinheit (1.1.2) und/oder der zweiten Hochtemperatur-Brennstoffzelleneinheit (1.1.1) zu einem Produktrückgewinnungssystem geleitet wird, das einen Wasserauslass, wobei der Wasserauslass insbesondere mit einem Wassertank des Schiffs verbunden ist, und einen Kohlendioxidauslass umfasst.

14. Schiff nach Anspruch 13, wobei der Kohlendioxidauslass mit einem ersten Druckbeaufschlagungssystem verbunden ist, das Niederdruck-Kohlendioxid bereitstellt und mit einem Tank des Schiffs verbunden ist, sodass der Tank mit einer Kohlendioxiddecke gefüllt werden kann, und/oder der Kohlendioxidauslass mit einem zweiten Druckbeaufschlagungssystem verbunden ist, das Hochdruck-Kohlendioxid bereitstellt und einen Kohlendioxid-Vorratsbehälter umfasst, und/oder wobei das Schiff einen Kohlendioxid-Landanschluss umfasst, der so ausgelegt ist, dass er Kohlendioxid einem Landnetz zuführt.

15. Schiff nach Anspruch 13 oder 14, wobei das Produktrückgewinnungssystem einen ersten Kondensator umfasst, der so ausgelegt ist, dass er bei einer Temperatur oberhalb von 65 °C betrieben wird und Reinwasser an dem Wasserauslass bereitstellt, und/oder wobei das Produktrückgewinnungssystem einen zweiten Kondensator umfasst, der so ausgelegt ist, dass er bei Umgebungstemperatur betrieben wird und nahezu reines Kohlendioxid an dem Kohlendioxidauslass bereitstellt.

## Revendications

1. Navire comportant des structures d'accueil ayant une première demande de puissance, un système de propulsion ayant une seconde demande de puissance et une centrale électrique, la centrale électrique comportant :
• une première unité de pile à combustible à haute température (1.1.2) ayant une première puissance nominale correspondant à la première demande de puissance,
• une seconde unité de pile à combustible à haute température (1.1.1) ayant une seconde puissance nominale correspondant à la seconde demande de puissance,
• un circuit de chauffage/refroidissement primaire (1) comportant un fluide de chauffage/refroidissement sans réaction, couplé thermiquement à la première unité de pile à combustible (1.1.2) et à la seconde unité de pile à combustible (1.1.1), ainsi qu'un moyen de régulation de flux régulant le flux du fluide de chauffage/refroidissement et
• un contrôleur adapté pour réguler l'alimentation en réactif à la première unité de pile à combustible (1.1.2), l'alimentation en réactif à la seconde unité de pile à combustible (1.1.1) et pour commander le moyen de régulation de flux, dans lequel le contrôleur est adapté pour faire fonctionner la centrale électrique dans un premier mode de fonctionnement dans lequel la première unité de pile à combustible (1.1.2) fonctionne à la première puissance nominale, aucun réactif n'est apporté à la seconde unité de pile à combustible (1.1.1) et le circuit de chauffage/refroidissement primaire (1) transfère de la chaleur de la première unité de pile à combustible (1.1.2) à la seconde unité de pile à combustible (1.1.1), de sorte que la seconde unité de pile à combustible (1.1.1) soit maintenue à une première température élevée.

2. Navire selon la revendication 1, dans lequel le fluide de chauffage/refroidissement est un métal liquide.

3. Navire selon la revendication 1 ou 2, dans lequel le moyen de régulation du flux est adapté et agencé de sorte qu'une direction de flux dans un segment du circuit de chauffage/refroidissement primaire couplé thermiquement à la seconde unité de pile à combustible (1.1.1) puisse être inversée par le contrôleur.

4. Navire selon l'une quelconque des revendications 1 à 3, dans lequel la centrale électrique comporte un système de reformeur adapté pour être alimenté en énergie thermique à partir du circuit de chauffage/refroidissement primaire (1).

5. Navire selon la revendication 4, dans lequel le système de reformeur comporte un circuit de chauffage/refroidissement secondaire (2) qui est couplé au circuit de chauffage/refroidissement primaire (1) via un premier échangeur de chaleur (2.1) et comporte un fluide de chauffage/refroidissement, en particulier un métal liquide.

6. Navire selon la revendication 5, dans lequel le circuit de chauffage/refroidissement primaire (1) comporte une dérivation régulable (1.7) pour le premier échangeur de chaleur (2.1).

7. Navire selon l'une quelconque des revendications 4 à 6, dans lequel le système de reformeur inclut un premier sous-système de reformeur (2.4.2) dimensionné pour s'adapter à la première unité de pile à combustible (1.1.2) et un second sous-système de reformeur (2.4.1) dimensionné pour s'adapter à la seconde unité de pile à combustible (1.1.1), dans lequel, dans le premier mode de fonctionnement, le contrôleur régule l'alimentation en énergie thermique au système de reformeur, de sorte que le second sous-système de reformeur (2.4.1) soit maintenu à une seconde température élevée.

8. Navire selon l'une quelconque des revendications 1 à 7, dans lequel la centrale électrique comporte une turbine à vapeur (3.1) alimentée avec de la vapeur provenant d'une chaudière (1.6) qui est thermiquement couplée au circuit de chauffage/refroidissement primaire (1), dans lequel la turbine à vapeur (3.1) est reliée à un générateur d'électricité, en particulier à un générateur d'électricité à couple variable (3.2).

9. Navire selon la revendication 8, dans lequel la turbine à vapeur (3.1) et le générateur d'électricité sont dimensionnés de sorte qu'ils puissent fonctionner lorsque la centrale électrique est dans le premier mode de fonctionnement.

10. Navire selon la revendication 8 ou 9, dans lequel une sortie de vapeur de la turbine à vapeur (3.1) est reliée à un échangeur de chaleur (4.1) fournissant de la chaleur à un moteur thermique à électrodialyse inversée (4.4.1).

11. Navire selon l'une quelconque des revendications 1 à 10, dans lequel le navire comporte un système d'alimentation en combustible avec un mélangeur de combustible (C.1), une cuve de méthanol (A.2), une pompe à méthanol (A.3) adaptée et agencée pour pomper du méthanol de la cuve de méthanol (A.2) vers le mélangeur de combustible (C.1), une alimentation en eau (B) et une pompe à eau (B.3) adaptée et agencée pour pomper l'eau de l'alimentation en eau (B) vers le mélangeur de combustible (C.1), dans lequel le mélangeur de combustible (C.1) est adapté et agencé pour préparer un mélange de méthanol et d'eau et pour fournir ce mélange en tant que combustible afin d'alimenter la première unité de pile à combustible (1.1.2) et/ou la seconde unité de pile à combustible (1.1.1).

12. Navire selon la revendication 11, dans lequel le système d'alimentation en combustible comporte une cuve de combustible (C.3) reliée au mélangeur de combustible (C.1) et une pompe à combustible (C.5) adaptée et agencée pour pomper du combustible à partir de la cuve de combustible (C.3) vers la première unité de pile à combustible (1.1.2) et/ou la seconde unité de pile à combustible (1.1.1), dans lequel la pompe à combustible (C.5) est dimensionnée pour s'adapter à la consommation de combustible de la première unité de pile à combustible (1.1.2) lorsqu'elle fonctionne à la première puissance nominale.

13. Navire selon l'une quelconque des revendications 1 à 12, dans lequel un flux d'échappement de la première unité de pile à combustible à haute température (1.1.2) et/ou de la seconde unité de pile à combustible à haute température (1.1.1) est guidé vers un système de récupération de produit comportant une sortie d'eau, la sortie d'eau en particulier étant reliée à une cuve d'eau du navire, et une sortie de dioxyde de carbone.

14. Navire selon la revendication 13, dans lequel la sortie de dioxyde de carbone est reliée à un premier système de mise sous pression fournissant du dioxyde de carbone basse pression et relié à une cuve du navire, de sorte que la cuve puisse être remplie avec une couverture de dioxyde de carbone, et/ou la sortie de dioxyde de carbone est reliée à un second système de mise sous pression fournissant du dioxyde de carbone haute pression et comportant un réservoir de stockage de dioxyde de carbone et/ou le navire comporte une pompe de déchargement de dioxyde de carbone adaptée pour fournir du dioxyde de carbone à un réseau terrestre.

15. Navire selon la revendication 13 ou 14, dans lequel le système de récupération de produit comporte un premier condenseur adapté pour fonctionner à une température supérieure à 65 °C et fournir de l'eau pure à la sortie d'eau, et/ou dans lequel le système de récupération de produit comporte un second condenseur adapté pour fonctionner à température ambiante et pour fournir du dioxyde de carbone presque pur à la sortie de dioxyde de carbone.
